# EUROPEAN PATENT APPLICATION

(11) **EP 4 768 712 A1**
(43) Date of publication of application: **01.07.2026**
(21) Application number: 24383467.8
(22) Date of filing: 27.12.2024
(51) Int. Cl.: F03D 1/06

(54) **HUB FOR A ROTOR OF A WIND TURBINE**

(71) Applicant: Nordex Energy Spain, S.A.U., 31395 Barasoain (Navarra) (ES)
(72) Inventor: GARCIA HERREROS ARDANAZ, Angel, 31395 Barasoain (Navarra) (ES); ECHARRI LATASA, Román, 31395 Barasoain (Navarra) (ES); RUBIO GUILLEN, Iñigo, 31395 Barasoain (Navarra) (ES)
(74) Representative: Epping - Hermann - Fischer

(57) **Abstract**

The present disclosure concerns a hub (1) for a rotor of a wind turbine, comprising a hub body (2), comprising a first flange (4), and at least one second flange (5) configured for supporting a rotor blade, the at least one second flange defining a second flange area (6) of the hub body. The hub further comprises a stiffening element (7) extending within at least a portion of the second flange area, wherein a thickness of the stiffening element in a direction perpendicular to the extension is constant at least over a defined extent.

## Description

The present disclosure relates to a wind turbine, a rotor for a wind turbine, and more particularly to a hub for a rotor of a wind turbine.

In state-of-the-art solutions wind turbines comprise hubs for carrying the rotor blades.

The hub of a wind turbine is supported by a shaft (rotor shaft) typically housed inside a nacelle and arranged to connect the hub carrying the blades to the tower of the wind turbine. In order to support one or more blades, the hub is provided with one or more flanges, usually referred to as a "blade connecting flange". A blade bearing that allows each blade to turn relative to the hub is connected, through bolts or otherwise, between the blade connecting flange of the hub and the blade section.

The hub together with the blades is capable of rotating under the influence of aerodynamic loads around the rotational axis, thereby providing a mechanical output at the shaft.

The hub supporting the bearings of the blades and the long rotor blades is subjected to high magnitude loads, e.g., at and around the flange region of the hub. The loads include but not limited to axial, radial and bending loads. Thus, it is crucial that a hub is robust enough to sustain these loads so that the deformations/deflections are minimized as much as possible, and other inherent effects such as ovalization are subsided.

Thus, it is a task of the present disclosure to provide a solution, how to reinforce the flanges and how to improve the load distribution on the hub in a beneficial manner in comparison to the known, state-of-the-art solutions.

Particularly, manufacturing of the hub shall be facilitated.

The present disclosure refers to a wind turbine, a rotor of a wind turbine, and a hub for a rotor of a wind turbine.

The hub may be a part of the rotor according to the present disclosure and the rotor may be a part of the wind turbine according to the present disclosure.

The hub according to the invention comprises at least a hub body. The hub body may be an essential structural part of the hub.

The hub body according to the present disclosure comprises at least a first flange and a second flange. The hub also comprises a stiffening element which may be an integral part of the hub body, or a separate part fixed to the hub body by fixing means.

The first flange is preferably configured for attaching the hub body to a rotor shaft of the wind turbine. Herein, the rotor shaft is configured as the component connecting the hub and the blades constituting the rotor with a nacelle and the tower of the wind turbine.

The second flange is preferably configured for supporting a rotor blade. In other words, one or several rotor blades of the wind turbine are preferably (movably) attached to the hub body via one or several second flanges.

In an embodiment, the hub body comprises three second flanges which are configured to support one rotor blade each, so that a total of three rotor blades are carried by the hub body. Alternatively, the hub body may also comprise one or several third flanges for supporting rotor blades, which are different than the second flanges.

According to the present disclosure, the at least one second flange (or each of the several second flanges) defines a second flange area of the hub body. The second flange area, according to an embodiment, is the inner circumferential area enclosed or circumscribed or defined by the second flange. For example, the second flange area may be characterized by an inner diametrical dimension of the second flange if the second flange is circular, or any other characteristic dimension if the second flange is substantially circular or non-circular.

For example, the first and second flanges are manufactured integrally with the hub body.

The stiffening element extends within at least a portion within the second flange area. In other words, the stiffening element extends in one or more directions to adjoin the hub body, the extension being partly or fully in the second flange area.

According to an embodiment, a portion of joint of the stiffening element may adjoin the second flange region while a remaining portion of the joint adjoins the hub body that does not comprise the second flange region.

According to some embodiments, the stiffening element adjoins the hub body at at least two joints. In other words, the stiffening element may originate or start at two or more points of the hub body and extend within the second flange area in one or more directions. The region of intersection between the stiffening element and the hub body (shell) constitutes the "joint".

According to an embodiment, the joints may be formed inherently when the stiffening element is cast along with the hub.

According to another embodiment, the joint may be a metallurgical joint such as a welded joint, or a mechanical joint like a riveted joint, a bolted joint, or a geometrically defined joint like a dovetail joint, snap joint, and so on.

The at least two joints may be selected from the same or from different types of joints. There may be more than two joints, e.g., three joints, four joints, five joints or more than five joints.

According to some embodiments of the present disclosure, a thickness of the stiffening element is constant at least over the defined extent. For example, a side view or a sectional side view indicated by X-X depicting the entire extent of the stiffening element within the second flange area reveals that the thickness of the stiffening element is constant over the defined extent. The sectional plane required for realizing the sectional side view along X-X may be considered at the center portion or at one or more edge portions. In either case, a constant thickness at least over the defined extent can be realized.

The "defined extent", or simply referred to as the "extent", according to some embodiments, may be at least one principal direction along which the stiffening element extends or substantially extends. For example, the extent may be linear relative to a reference direction, e.g., a reference direction which being (longitudinal) extension of the rotational axis, or may be non-linear, e.g., circular or elliptical within the blade flange area. In case of a circular extent, a circumferential direction of the second flange area may be taken as the reference direction.

In other embodiments, the "extent" may refer to a direction of extension of the stiffening element where the stiffening element has significantly higher dimension in comparison to the dimensions in rest of the directions. For example, if the stiffening element is a bar or a beam, the extent is defined along the length direction whose dimension is significantly higher than the dimensions in other two directions, i.e., width and height/depth. In case of circular stiffening element like a ring, the extent may be the circumferential length whose dimension is significantly higher than the width and height/depth.

The thickness, according to some embodiments, may be defined as a direction perpendicular to the extent of the stiffening element. The extent, for example, may be a length direction of the stiffening element. Thickness direction of the stiffening element extends orthogonally to the extent of the stiffening element, and therefore, may be comprehended as a height or a depth of the stiffening element when the stiffening element is viewed in cross-section or from the side.

The stiffening element may be configured as a stiffening web, for example, as a bar, a beam, a plate, a pipe, or a different type of element with any geometry.

A stiffening element with a constant thickness comes advantageously with a high stiffness and high mechanical stability. Furthermore, casting, de-molding and manufacturing processes associated with the stiffening element according to the present disclosure is advantageously easy.

The stiffening element may be cast integrally with the hub or, produced separately and connected to the hub later.

Further, the stiffening element extends in several directions, which may include a length direction, between at least two joints with the hub body. Furthermore, the stiffening element extends in a width direction, extending between two other points within the second flange area perpendicularly to the respective extension direction, e.g., length direction. And the stiffening element extends in the thickness direction extending perpendicularly to the length direction and to the width direction and therefore also perpendicularly to a main area enclosed by the second flange area.

The stiffening element has a symmetric characteristic, for example, the stiffening element is designed as a symmetrical web. Such a web may have at least one symmetrical surface, wherein the symmetrical surface is defined or referenced relative to the rotational axis, and wherein the thickness direction of the stiffening element extends orthogonally to the symmetrical surface in the direction towards the rotational axis.

According to an embodiment, the stiffening element has a geometry selected from one of a rectangular shape, e.g., a cuboid or a prismatic shape, an x-shape, wherein one or several beams or arms form an x-like structure, a y-shape where one of arms or webs is inclined relative to at least one other web to form a y-shape, a circular shape or a non-circular arcuate shape, wherein one or several beams form a circular structure like an annulus, a ring, or an elliptical shape, a parabolic shape, a hyperbolic shape, and any combinations thereof.

According to one embodiment, the stiffening element may be designed as a fully solid part, or a hollow part, or a combination of both where the solid part has certain hollow features, like a hollow pocket or a hollow recess.

In one embodiment, the stiffening element may have at least one non-planar feature, e.g., an arcuate edge or a bow shaped upper surface.

The mentioned geometry may be the main geometry of the stiffening element. The stiffening element may further comprise additional sections deviating from the main geometry.

The geometry is symmetrical which enhances stability and facilitates manufacturing.

According to an embodiment, the stiffening element extends in a length direction, whereby the length direction may be defined or referenced to an extension direction of the rotational axis of the rotor shaft, or substantially along the rotational axis of the rotor shaft. The axis of the rotor shaft is same as the rotational axis of the hub itself, so the terms "hub axis", "rotational axis" or simply "shaft axis" are interchangeably used in the description.

In some embodiments, the length direction may be defined as a direction of extension between the first flange and a fore end of the hub body opposite to the first flange. In other words, length direction means that the direction of extension is along or substantially along the rotational axis.

The above reference to the rotational axis applies when the wind turbine is viewed from the top. When viewed from the side, the stiffening element may have an inclination relative to the rotational axis.

In other embodiments, the length direction may be defined or referenced as being a longitudinal direction extending from the rotor till the rear end of the nacelle as viewed from the side or the top.

This arrangement may result in optimal mechanical stability.

In case of a rounded or circular geometry, at least a section of the stiffening element may extend in the extension direction of the shaft (length direction). For example, if the principal direction or the extent of the stiffening element is circular, i.e., an extension along and concentric to the periphery of the second flange, then a widthwise component of the stiffening element may extend at least along the length direction.

According to an embodiment, the stiffening element comprises one, two or more sections across the length direction, such that a thickness of each section is constant along the length direction.

This may facilitate efficient casting of the stiffening element integrally with the hub while providing different mechanical/structural properties corresponding to the different sections.

The freedom of design is advantageously enhanced.

According to one special embodiment, one single section may comprise the whole stiffening element.

According to an embodiment, the stiffening element comprises at least two sections and an intersection of any two adjacent sections of the two or more sections comprises a transition portion.

The transition portion may be configured as a step, a taper, or a fillet (rounded, elliptical, etc.,), or as a repeating geometrical pattern such as corrugations, flutes, etc.

An appropriate shape of the transition portion advantageously supports or effectuates the load distribution in the stiffening element.

According to an embodiment, at least one of the joints comprises a depressed portion advantageously configured for accommodating at least a portion of a bolt of the rotor blade or of a rotor blade bearing.

The depressed portions are localized surface areas of the joints having elevations lower or slightly lower than those of the surrounding surface of the joints, or lower than an upper surface area of the stiffening element itself away from the joint.

A fillet or a curved recess is one example of the depressed portion.

The depressed portion allows an operator to conveniently place and maneuver tools, machines, etc., for operations, for example, fastening or unfastening rotor blade bolts, etc.

Thus, the bearings of the rotor blades and therefore the blades can be arranged at a precisely specified position.

By arranging the bearings accordingly, the load distribution can be improved and the design of the hub can be selected to be more variable or flexible.

According to an embodiment, a cross section of the stiffening element comprises a center portion with a constant thickness along a width direction, and at least one edge portion configured with a variable thickness along the width direction, the width direction being perpendicular to the respective extension direction (extent) of the stiffening element. Thickness is the dimension of the stiffening element perpendicular to the extension direction (extent) and the width direction, as defined before.

A cross section is the cross section of the stiffening element perpendicular to the defined extent, and cross-sectional view of the stiffener depicts width and thickness of the stiffening element.

Different specific embodiments are feasible. E.g., the stiffening element may have a constant thickness in the center portion but may have a variable thickness, e.g., a tapered or a fillet structure in the edge portion, whereby the thickness of the edge portion may get narrower or broader.

According to different embodiments, one edge or more edges in the edge portion may be tapered, stepped, arcuate, fluted, corrugated, or filleted.

The stiffening may also comprise two or more edge portions adjacent to the center portion from different sides.

The described structure with variable thick edge portions may facilitate easier de-molding of the stiffening element during manufacturing.

According to an embodiment, the stiffening element comprises at least two provisions for supporting a pitch actuator for pitching the rotor blade.

The provisions may be configured as recesses or holes which may show a flange structure or resemble a bracket.

A pitch actuator is an actuator for driving and setting a pitch angle of the rotor blade.

Advantageously, no further supporting structures for the pitch actuator are required beside the stiffening element.

According to an embodiment, the rotor shaft defines the rotational axis (alternately referred to as shaft axis), and the at least two provisions for supporting the pitch actuator are arranged symmetrically relative to the rotational axis.

Thus, the pitch actuator may be installed on either side of the rotational axis.

If the pitch actuator renders a fault or exhibits a malfunction, for example, damage to the meshing elements of the slewing bearing, the pitch actuator may be removed from that provision and attached to the other provision where there is no damage to the slewing bearing teeth. Because of the symmetry, the distance (linear or angular) between each of the pitch actuators and the rotational axis is kept constant.

According to an embodiment, the pitch actuators are additionally or alternatively to the previous embodiment arranged asymmetrically relative to an axis perpendicular to the rotational axis.

More particularly, relative to an axis inside the main area of the second flange as defined before which is perpendicular to the direction of the rotational axis.

In other embodiments, the axis perpendicular to the rotational axis may refer to a direction parallel to widthwise direction of the nacelle.

According to an embodiment, the stiffening element has an x-shape as introduced before, and comprises a pair of first arms adjoining the hub body proximal to the first flange, and a pair of second arms adjoining the hub body proximal to a fore end opposite to the first flange.

This way, the arms of the x-shaped stiffening element may not adjoin the hub body exactly along the shaft axis, but are angularly offset relative to the shaft axis. This results in an enhanced range of stiffness along the length direction, the radial direction, as well as along the peripheral (circumferential)direction of the hub body, in particular the second flange.

In addition, the x-shape is particularly advantageous since access openings are formed between the arms of the x- shaped stiffening element which allow accessibility of the rotor blade from the hub.

Additionally, a central opening or aperture may be provided in a central portion between the arms or an intersection of both the pairs of arms.

According to an embodiment, the pair of first arms of the x-shaped stiffening element defines a first angle between the pair of first arms, and the pair of second arms defines a second angle between the pair of second arms, wherein the second angle is preferably different from the first angle.

According to an embodiment, at least one arm of the pair of first arms has a different width and/or thickness than at least one arm of the pair of second arms. The width direction is generally orthogonal to the defined extent (extension direction) as well as the thickness (height/depth) defined previously.

According to an embodiment, a periphery of the second flange area and any two adjacent arms of the pair of first arms and the pair of second arms define an opening, e.g., an access opening.

An opening may be required to access an interior of the rotor blade or a corresponding blade bearing via the second flange area.

Thus, four (access) openings are provided between the four different arms of the x-shaped stiffening element. One opening is provided between each adjacent pair of arms, wherein "adjacent" in particular means "adjacent in or along the circumferential direction of the second flange area".

Furthermore, according to a further embodiment and as also mentioned before, an additional aperture may be provided at an intersecting region between the pairs of first and second arms.

The aperture may be configured, for example, as a central rectangular or circular cutout which allows access to a pitch console associated with the pitch actuators for installation, repair, inspection and/or replacement.

According to an embodiment, the stiffening element comprises an annular element (as an alternative to the x-shaped element).

According to an embodiment, the annular element may have a geometry selected from one or more of circular, and elliptical.

According to a specific embodiment, a plurality of recesses is provided between the annular element and the periphery of the second flange.

Each recess is separated from an adjacent recess by a joint configured between the stiffening element, in particular the annular element and the second flange.

Each recess may have a radial and a circumferential extent, and according to an embodiment, at least one recess has a comparably smaller radial extent and a comparably larger circumferential extent.

The circumferential and/or radial extent may be different for each recess and may be asymmetrically distributed along the circumference of the annular element, e.g., a ring.

According to a specific embodiment, the circumferential extent of at least one recess is greater than the radial extent by a ratio that is preferably at least 3, more preferably at least 5, more preferably at least 7 to 10, and most preferably at least 12.

The recesses work as access openings as defined before.

The purpose of the access openings may be to access bolts or a set of bolts used for attaching the blade or the blade bearing to the second flange. Because of the plurality of recesses with the defined access ratio, a particular set of bolts do not need to align with a particular set of recesses.

Either in case of an x-shaped stiffening element or of an annular element, the cast may be configured integrally with the hub during manufacturing, or the element may be cast separately and connected to the hub later during manufacturing.

Furthermore, since provisions for supporting pitch actuators may be foreseen, additional pitch actuator supporting flanges (or brackets) can be omitted.

The annular shape advantageously provides an additional surface area for movement of service personnel, equipment, tools, machines, etc., and access to the entire circumferential region of the stiffening element.

According to an embodiment, the stiffening element comprises a first web and at least one second web, wherein the at least one second web is inclined relative to the extension direction of the rotor shaft and/or the first web.

According to an embodiment, the at least one second web has a different width and/or thickness than the first web.

In the following, the present disclosure is illustrated by figures and examples.

The present disclosure is not limited to the shown examples.

The figures show as follows:
Figure 1: Schematic view of a wind turbine according to an exemplary embodiment.
Figure 2: Perspective view of a section of a hub comprising an essentially linear stiffening element, in particular a rectangular stiffening element, according to a first embodiment.
Figure 3: Schematic views of different cross-sections of the stiffening elements, each having a central portion with constant thickness and an edge portion with variable thickness, according to a second embodiment.
Figure 4: Schematic views of different longitudinal profiles and corresponding cross-sections of the stiffening elements, according to some embodiments.
Figure 5: Perspective view of a hub comprising an exemplary x-shaped stiffening element according to a third embodiment.
Figure 6: Perspective view of a hub comprising an exemplary annular-shaped stiffening element according to a fourth embodiment.
Figures 7 and 8: Perspective views of a hub comprising a y-shaped stiffening element according to exemplary embodiments.
Figure 9: Schematic sectional view illustrating a joint between the stiffening element and the hub body according to an exemplary embodiment. The joint area comprises a depressed portion configured for accommodating a portion of a bolt of the rotor blade.

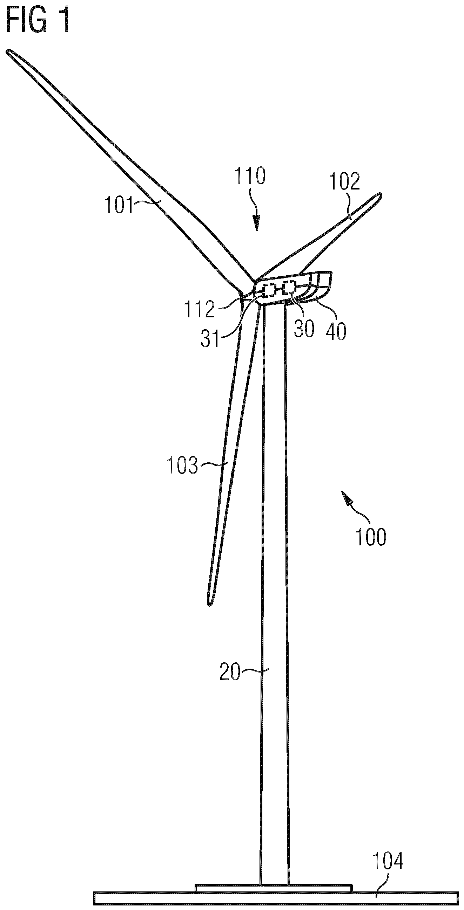

Figure 1 shows a wind turbine 100 which comprises a tower 20. The tower 20 is fixed to the ground by means of a foundation 104. At one end of the tower 20, opposite to the ground, a nacelle 40 is rotatably mounted. The nacelle 40 comprises, for example, a generator (not shown) which is coupled to a rotor 110 via a gearbox (not shown). The rotor 110 comprises three (wind turbine) rotor blades 101, 102, 103, which are arranged on a rotor hub 112, said rotor hub 112 being connected to a rotor shaft (not shown).

During operation, the rotor 110 is set in rotation by an air flow, for example wind interacting with the blades 101, 102, 103 resulting in forces acting on the blades 101, 102, 103. This rotational movement is transmitted to the generator via the drive train comprising, inter alia, the rotor shaft and the gearbox. The generator converts the mechanical energy of the rotor 110 into electrical energy.

The nacelle 40 has to be rotated into the wind to optimize the energy output of the wind turbine 100. This is attained through the yaw system (not shown). Moreover, the pitch angles of the rotor blades 101, 102, 103 have to be adjusted according to the wind speed and other conditions to optimize the performance of the rotor and to keep the energy yield of the turbine at desired levels. In order to control and operate several systems, the wind turbine comprises a main controller 30 (turbine controller), and optionally an auxiliary control unit 31 which is arranged in the nacelle 40 and communicatively coupled with the main controller 30.

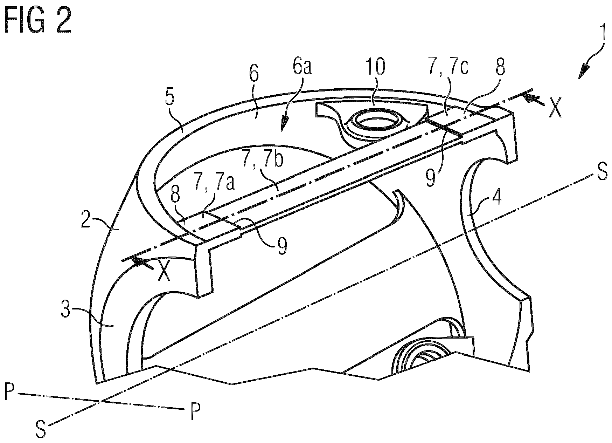

Figure 2 shows a first embodiment of a stiffening element 7.

The figure shows a hub 1 comprising the hub body 2 essentially shaped, e.g., as a hollow circular body. The hub body 2 may also be referred to as a shell of the hub.

The hub body 2 has a first flange or shaft flange 3 which may be connected to a shaft of a wind turbine, such that the shaft connects the hub 1 or the hub body 2 to a nacelle of the wind turbine.

The hub body 2 has a fore end 4 opposite to the side of the shaft flange 3. The shaft flange or the first flange 3 may be interchangeably referred to as a rear end 3 of the hub body 2 throughout the description.

A shaft axis S-S, also referred to as a rotational axis of the shaft or the hub, may extend from the rear end 3 to the fore end 4 of the hub body 2.

Furthermore, around the circumference of the hub 1, between the fore end 4 and the rear end 3, one or more second flanges (or blade flanges) 5 are provided.

In the example, three second flanges 5 are illustrated, which are arranged regularly around the circumference of the hub 1.

Here, "regularly" means symmetric arrangement of the second flanges along the circumference or about the rotational axis S-S with uniform distances between each of the second flanges 5. For example, if there are three second flanges corresponding to three rotor blades, angular spacing between two adjacent flanges is exactly 120 degrees.

Each flange may have a circular shape.

According to an embodiment, the flange is a ring or resembles shape of a ring.

The blade flanges 5 support the rotor blades via blade bearings. The blade bearings facilitate turning or pitching of each blade about a central axis of the respective second flange.

The bearings of the blades are usually arranged and fixed by bolts to the blade flanges 5.

Thus, the loads acting on the blades are transferred to the second flanges 5 and then to the hub 1.

A flange area 6 of the second flange 5 is an inner circumferential area defined or circumscribed or enclosed by the second flange 5. The flange area 6 may define two opposite points that face each other along the flange area 6, for example, two diametrically opposite points.

In order to improve load distribution, a stiffening element 7 is arranged in one or more of the second flanges 5 between the two opposite points of the flange area 6, as shown in Figure 2.

At the two opposite points, the stiffening element 7 firmly adjoins the second flange 5 via joints 8.

In the example of the first embodiment, the stiffening element 7 on the top of the hub 1 is configured as an essentially rectangular beam or web extending in a length direction of the rotational axis S-S, which means from the fore end 4 to the rear end 3.

When viewed from the side, it may be seen that a plane of the stiffening element 7 does not extend entirely parallel to the shaft axis S-S but may extend at an angle to the axis. The inclination may be due to the cone angle inclination of the second flange 5 relative to the shaft axis S-S. However, when Figure 2 is viewed from the top, the stiffening element 7 may be seen extending along the shaft axis S-S.

Further, in alternate embodiments, the stiffening element 7 may extend at an inclination relative to the shaft axis S-S as viewed from the top, e.g., at 90 degrees relative to the axis S-S.

Furthermore, the stiffening element 7 of the first embodiment may have a continuous single section, or three sections 7a, 7b and 7c as shown, wherein a thickness of the stiffening element 7 is constant for each section.

In the illustrated embodiment, the thickness of the outer sections 7a and 7c is identical and thicker than the thickness of the inner section 7b. This configuration may enhance the stiffness of the stiffening element 7, especially at the joints where stresses tend to be higher. Reduced thickness at the center may also be beneficial in terms of material, weight and cost reductions.

Between the sections 7a, 7b and 7c, transition portions 9 are foreseen which may be configured as a fillet, a taper or a step. The fillet may be concave or convex in nature and may have a geometry that is of round, elliptical or any other arcuate nature.

The transition portions 9 may be identical or unidentical in each section or between different sections. For example, a single transition portion may be characterized by a step on one side, e.g., on the top, and a taper on the other side, e.g., at the bottom.

According to an embodiment, the hub body 2 comprises pitch actuator supporting flanges (or brackets) 10, which are arranged at the second flange 5 for supporting pitch actuators for setting pitches of the rotor blades.

According to another embodiment, the stiffening element 7 may be provided with one or more provisions, e.g., an aperture or an opening (not shown in Figure 2) for supporting the pitch actuator, instead of a separate flange 10 or a bracket 10.

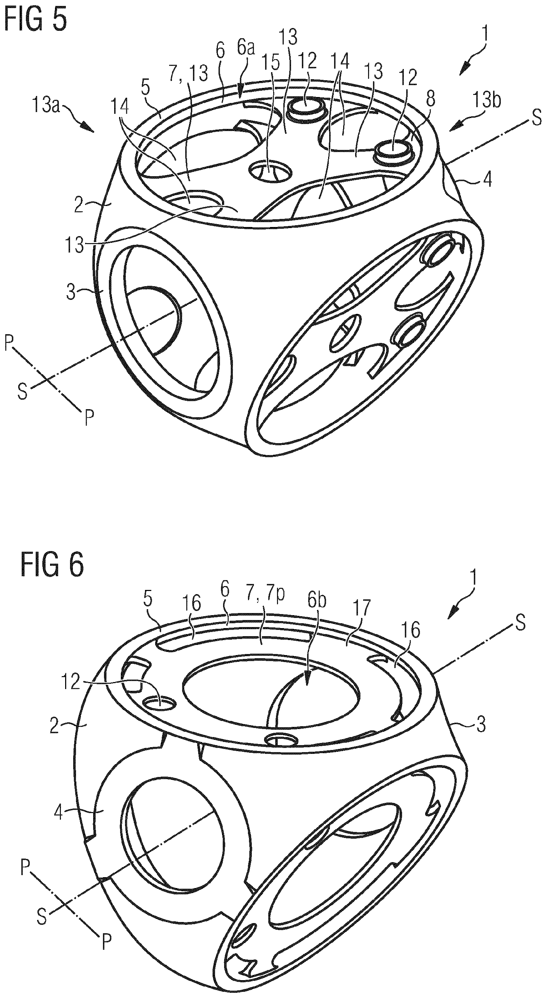

The pitch actuator supporting flanges (or brackets) 10 can be omitted in further embodiments as described below (Figures 5 to 8) .

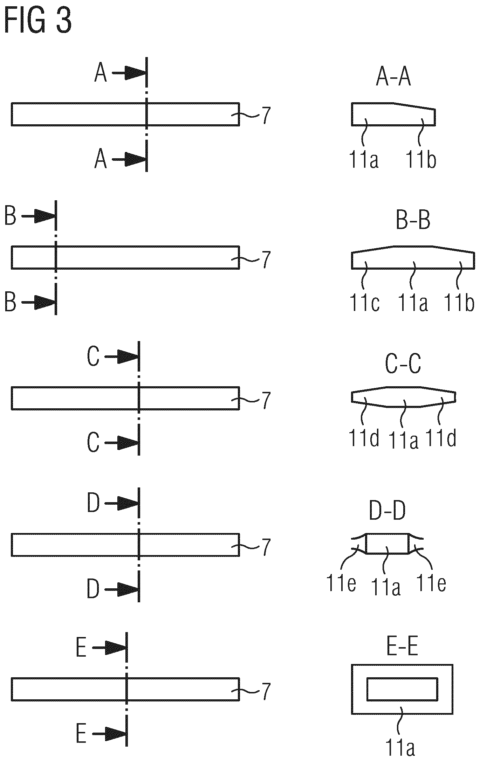

In figure 3, side and cross-sectional views of different types of stiffening elements 7, particularly with respect to different edge geometries, are shown. On the left side, the stiffening elements 7 are shown from side, and on the right side the cross-sectional views taken along respective sections (A-A, B-B, C-C, D-D, E-E) of the side views are shown.

In all cross-sections a center portion 11a or a substantial center portion of the stiffening element 7 has a constant thickness along a width direction, in addition to the length direction, as defined in the general part of the text, whereas the edge portions 11b, 11c and 11d may have variable thickness e.g., along the width direction. For example, 11b-11d depict tapered edges, and 11e depicts fillets or arcuate edges.

Further, referring back to figure 2, a side view or a sectional side view as indicated by X-X depicting the entire extent of the stiffening element 7 within the second flange area 6 reveals that the thickness of the stiffening element is constant over the defined extent. In the example shown in figure 2, the defined extent is the length direction referenced to the extension direction of the rotational axis.

The sectional plane required for realizing the sectional side view (referenced by X-X) may be considered or taken at the center portion 11a or at one or more edge portions 11b-11e. In either case, the section reveals a constant thickness at least over the defined extent when the view is along the section X-X.

Furthermore, if there are two or more sections 7a, 7b, 7c, along the defined extent, then the sectional view along X-X reveals that each of the sections 7a, 7b, 7c has a constant thickness along its respective extent.

According to an embodiment, the center portion 11a may be hollow (see figure 3, E-E). For example, if the center portion 11a is rectangular, then it may comprise a hollow rectangular (or any other geometry) pocket extending along the defined extent, with the pocket being surrounded/bound by remainder of the material of the stiffening element.

Same applies to other cross-sectional geometries (e.g., corner rounded square, etc.) where the hollow portion may be geometrically similar or non-congruent with respect to the outer cross-sectional geometry. A non-limiting example is a stiffening element with the 'corner rounded square' outer geometry and having a circular hollow portion inside.

According to an embodiment, the extreme sections 7a, 7c as shown in figure 2 may be hollow (defined with a pocket) and the central section 7b may be solid.

According to an embodiment referenced by figure 3, the stiffening element 7 may have a tapered, a fillet, a stepped, an arcuate, a fluted, a notched, a recessed, or a corrugated geometry in the edge portion 11b, 11c, 11d, 11e whereby the thickness of the edge portion is non-uniform, i.e., gets narrower or broader or undergoes a fluctuating transition as it progresses towards the edge. In other words, the edge portion gets broader (or narrower according to some embodiments) towards the center portion which then remains constant for a given distance along the width.

The edge portion according to an embodiment may be manufactured so as to comprise a notch or a recess.

According to an embodiment, the recess or notch or corrugations or flutes may be reinforced by suitable means.

According to an embodiment, the center portion and the at least one edge portion may have different material properties and/or different mechanical properties and/or different structural properties.

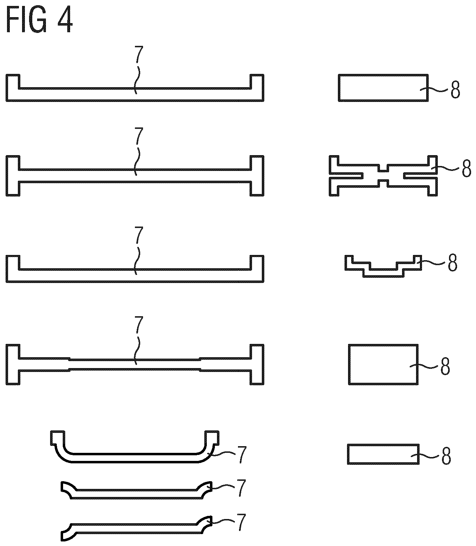

Furthermore, figure 4 illustrates different stiffening elements 7, particularly with respect to different configurations of the joints 8 or the portions of the joints 8 that join the stiffening element 7 to the hub body 2. Left hand side of figure 4 illustrates side views of the stiffening element with the joints 8 shown at the extremities, while right hand side illustrates corresponding front or rear view of a cross-section of the joint 8. As can be seen in the figures, the thickness of the stiffening elements is constant at least over a defined extent along the length of the stiffening element 7. However, the joints 8 may have variety of cross-sectional shapes, e.g., a rectangular cross-section, a tresca cross-section, a stepped cross-section, and so on.

Different geometrical configurations of the joints 8 are intended to improve the stiffness and mechanical stability of the stiffening elements 7 and the hub body 2 as a whole.

In an embodiment, the cross-sectional shape of a joint 8 is asymmetric about a horizontal and/or a vertical plane.

For an optimum distribution of loads, symmetrical cross-sections, preferably with several symmetry axes, such as rectangular or cross-shaped or x-shaped or tresca shaped cross-sections may be employed.

In the further figures 5 to 8, further embodiments, essentially similar to the first embodiment are presented.

The hub 1 and the hub body 2 may be identical for all embodiments, but the same should not be considered as a limitation, as the stiffening elements of the present embodiments may be employed in a hub of any type.

However, the geometry of the stiffening element 7 is different for each embodiment.

All following embodiments have advantageous stiffening elements 7 with integral provisions 12 for arranging the pitch actuators. Thus, pitch actuator supporting flanges (or brackets) can be omitted in all following embodiments.

In figure 5, the stiffening element 7 is configured with an x-shape.

The x-shaped stiffening element 7 extends in the length direction which in turn may extend along an extension direction of the rotational axis S-S from the fore end 4 to the rear end 3 of the hub 1.

According to an embodiment, the x-shaped stiffening element 7 comprises four arms 13, e.g., classified as a pair of first arms 13a proximal to the first flange 3, and a pair of second arms 13b proximal to the fore end 4. Between each pair of arms an opening 14 for accessing the blade from the hub body 2 through the flange 5 is provided.

Besides, an additional aperture 15 is recessed in the center of the x-shape for additional access.

The aperture 15 may be oval, circular, rectangular or of any other shape. The aperture 15 may allow access to certain electrical components associated with the pitch system, e.g., the pitch box or cabinet.

The provisions 12 for arranging the pitch actuators are arranged in two arms, e.g., the second arms 13b of the x shape stiffening element 7 symmetrical to the shaft axis S-S.

According to some embodiments, the pair of first arms 13a defines a first angle between them, and the pair of second arms 13b defines a second angle between them, such that the second angle is different from the first angle.

The angle between the second arms 13b i.e., the second angle may allow sufficient separation (circumferential) between the provisions 12 for supporting the pitch actuators, so that any malfunction arising when the pitch actuator is positioned in one of the provisions 12 can be remedied by shifting the pitch actuator to the other provision 12.

Furthermore, the different first angle and the second angle between the pair of first arms 13a and the second arms 13b, respectively, may allow optimization of load distribution or stiffness, while providing other benefits like high strength to weight ratio, material optimization, and so on. Such a stiffening element 7 also results in an asymmetry along an axis P-P perpendicular to the shaft axis S-S.

According to an embodiment, the stiffening element 7, x-shaped or otherwise, may form a joint 8 at a region where the second flange 5 adjoins the adjacent body (or shell) of the hub 1. In such a case, a portion of thickness of the stiffening element 7 may adjoin the second flange 5, while the remaining thickness adjoins the hub body (or shell).

In an embodiment, a joint 8 of the stiffening element 7, x-shaped or otherwise, may have same or different thickness in comparison to the stiffening element 7. For example, a joint 8 may have higher thickness, say by at least 1.2 times, or 1.4 times, or 1.5 times or 2 times or higher, than the thickness of the stiffening element 7.

In another embodiment, a joint 8 of the stiffening element 7, x-shaped or otherwise, which may be characterized by a fillet or any other contour may have a variable width as it terminates at the hub body 2, while having a constant thickness (or depth).

In an embodiment, the x-shaped stiffening element 7 may be designed such that the pair of first arms 13a may have a first thickness, and the pair of second arms 13b may have second thickness, with the first thickness being different from the second thickness.

In another embodiment, the x-shaped stiffening element 7 may be designed such that each of the four arms 13 constituting the pair of first and second arms 13a, 13b has different thickness and/or width in comparison to the other three.

In an embodiment, the x-shaped stiffening element 7 may be designed such that at least a portion of a common edge extending along a first arm 13 and a corresponding second arm 13 has a curved contour.

In an embodiment, the x-shaped stiffening element 7 may be designed such that a plane of extension of the pair of first arms 13a is different than a plane of extension of the second arms 13b. In other words, the pair of first arms 13a may constitute one section of the stiffening element, while the pair of second arms 13b may constitute another section of the stiffening element 7, as explained previously with reference to Figure 2.

Alternately, a plane of extension of a first arm 13a and a second arm 13b on one side (left or right) of the shaft axis S-S may be different from a plane of extension of a first arm 13 and a second arm 13 on the other side (right or left) of the shaft axis S-S.

Figure 6 illustrates an embodiment where the stiffening element 7 is configured as an annular element 7p, e.g., a ring like element or an elliptical element.

The annular element 7p extends relative to the whole circumference of the flange 5 and may form two or more joints 8 along the circumference of the flange 5.

Recesses 16 may be formed between the periphery (inner circumference) 6a of the second flange 5 and the stiffening element 7.

According to an embodiment, the recesses 16 may allow at least a portion of a plurality of bolts (not shown) of the blade root end section to extend through them.

Between the adjacent recesses 16 joint sections 17 resulting in joints 8 are foreseen for joining the annular element 7p with the second flange 5. In the illustrated example, five joint sections 17 are regularly arranged. A different number of joint sections may be feasible as well.

According to an embodiment, the joint sections 17 and recesses 16 are arranged symmetrically relative to the shaft axis.

In an embodiment, the annular element 7p may contain a cut-out (not shown) essentially extending radially such that the stiffening element 7 may form an open ring (like C-shape) configuration instead of a closed ring (O-shape) configuration. Such a cut-out may be present between two consecutive joint sections 17.

The annular element 7p may have a concentric central opening 6b that allows assembly of modules associated with the pitch system. The central opening 6b may also serve as an access opening between the blade interior and the hub 1.

Overall, the whole structure of the stiffening element 7p is symmetrical to the shaft axis in order to achieve an optimum load distribution.

Also, the two provisions 12 for arranging the pitch actuators may be arranged symmetrically, e.g., equidistant relative to the shaft axis.

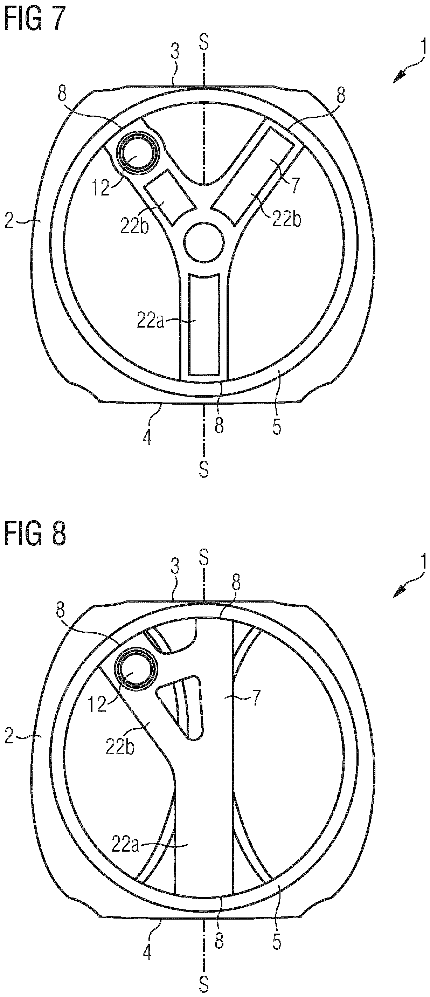

In figures 7 and 8, the stiffening element 7 may have a y-shaped geometry with a first web 22a and at least one second web 22b, wherein the at least one second web 22b is inclined relative to the extension direction of the rotational axis and/or the first web 22a.

Thus, stiffening element 7 is configured, such that the first web 22a extends along the length direction from the fore end 4 to the rear end 3 of the hub 1, while the at least one second web 22b may be inclined relative rotational axis and/or the first web 22a.

A provision 12 for supporting the pitch actuator may be provided in the first web 22a and/or one of the second webs 22b. If there are two second webs 22b, the provision 12 may be provided in each of them.

Besides, several further geometries and combinations are feasible.

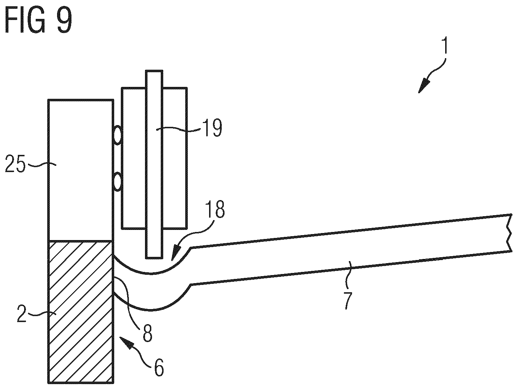

Figure 9 shows a schematic sectional view of the joint 8 according to an exemplary embodiment.

The shown joint 8 comprises a depressed portion 18 advantageously configured for accommodating at least a portion of a bolt 19 passing through a bearing 25 into the rotor blade.

The depressed portions 18 are localized surface areas on the joints 8 having elevations slightly lower than those of the surrounding surface of the joints 8 or the stiffening element 7.

A fillet or the shown curved recess 18 is one example of the depressed portion 18.

Thus, the bearings 25 of the rotor blades, and therefore the blades, can be arranged at a precisely specified position by arranging the bolts 19 in the depressed portions 18.

By arranging the bearings 25 accordingly, the load distribution can be improved and the design of the hub 1 can be selected in a more variable or flexible manner.

### List of reference signs

1, 112 hub
2 hub body
3 rear end or first flange or shaft flange
4 fore end
5 second flange or blade flange
6 flange area of the second flange
6a periphery of the second flange
6b central opening
7 stiffening element
7a,7b,7c sections of the stiffening element along the length direction
7p annular element
8 joints
9 transition portion
10 pitch actuator supporting flanges (or brackets)
11a, 11b, 11c, 11d, 11e center and edge portions in a width direction of the stiffening element
12 provisions
13 arms
13a pair of first arms
13b pair of second arms
14 openings
15 aperture
16 recesses
17 joint sections
18 depressed portion
19 bolt of rotor blade
20 tower
22a, 22b first and second webs
30, 31 controller
40 nacelle
25 bearing
100 wind turbine
101, 102, 103 rotor blades
104 foundation
110 rotor
A-A to E-E sections
S-S shaft axis/rotational axis
P-P axis perpendicular to the shaft axis
X-X section along the extent

## Claims

1. A hub (1) for a rotor of a wind turbine, comprising:
- a hub body (2), comprising:
• a first flange (3) configured for attaching the hub body to a rotor shaft of the wind turbine, and
• at least one second flange (5) configured for supporting a rotor blade, the at least one second flange defining a second flange area (6) of the hub body,
- a stiffening element (7) extending within at least a portion of the second flange area, the stiffening element adjoining the hub body at at least two joints (8),
wherein a thickness of the stiffening element is constant at least over a defined extent.

2. The hub according to claim 1, wherein the stiffening element has a geometry selected from one of a rectangular shape, an x-shape, a y-shape, a circular shape, an elliptical shape, a parabolic shape, a hyperbolic shape, and combinations thereof.

3. The hub according to any of claims 1 or 2, wherein a length direction of the stiffening element extends along an extension direction of a rotational axis (S-S) defined between the first flange and a fore end (4) of the hub body opposite to the first flange.

4. The hub according to claim 3, wherein the stiffening element comprises one, two or more sections (7a, 7b, 7c) across the length direction, such that a thickness of each section is constant along the length direction.

5. The hub according to claim 4, wherein an intersection of two adjacent sections of the two or more sections comprises a transition portion (9) which is configured as a step, a taper, or a fillet.

6. The hub according to any of claims 1 to 5, wherein at least one of the joints (8) comprises a depressed portion (18) configured for accommodating at least a portion of a bolt (19) of the rotor blade.

7. The hub according to any of claims 1 to 6, wherein the stiffening element comprises at least two provisions (12) for supporting a pitch actuator for pitching the rotor blade.

8. The hub according to claim 7, wherein the rotor shaft defines a rotational axis (S-S), and the at least two provisions for supporting a pitch actuator:
- are arranged symmetrically relative to the rotational axis and/or
- are arranged asymmetrically relative to an axis (P-P) perpendicular to the rotational axis.

9. The hub according to any of claims 1 to 8, wherein the stiffening element has an x-shape, and comprises a pair of first arms (13a) adjoining the hub body proximal to the first flange (3), and a pair of second arms (13b) adjoining the hub body proximal to a fore end (4) opposite to the first flange (3) .

10. The hub according to claim 9, wherein:
- the pair of first arms (13a) define a first angle between the pair of first arms, and the pair of second arms (13b) define a second angle between the pair of second arms, and
- the second angle is different from the first angle.

11. The hub according to any of claims 9 or 10, wherein:
- a periphery (6a) of the second flange area and any two adjacent arms of the pair of first arms and the pair of second arms define an opening (14).

12. The hub according to any of claims 9 to 11, wherein an aperture (15) is provided at an intersecting region between the pairs of first and second arms.

13. The hub according to any of claims 1 to 8, wherein the stiffening element comprises an annular element (7p), and a plurality of recesses (16) is provided between the annular element (7p) and a periphery (6a) of the second flange.

14. The hub according to claim 13, wherein:
each of the plurality of recesses has a radial extent and a circumferential extent, and the circumferential extent of at least one recess is greater than the radial extent.

15. The hub according to any of claims 1 to 8, wherein the stiffening element comprises a first web (22a) and at least one second web (22b), wherein the at least one second web is inclined relative to the extension direction of the rotational axis and/or the first web .
